# EUROPÄISCHE PATENTSCHRIFT

(11) **EP 3 670 395 B1**
(45) Veröffentlichungstag und Bekanntmachung des Hinweises auf die Patenterteilung: **06.09.2023**
(21) Anmeldenummer: 19215885.5
(22) Anmeldetag: 13.12.2019
(51) Int. Cl.: B65G 21/10, B65G 23/24, F16H 7/10, G01G 19/03

(54) **ENDLOSFÖRDERVORRICHTUNG MIT ENTNEHMBARER FÖRDEREINHEIT UND VERFAHREN**
ENDLESS CONVEYOR WITH REMOVABLE CONVEYOR UNIT AND METHOD
DISPOSITIF DE TRANSPORTEUR CONTINU POURVU D'UNITÉ DE TRANSPORT POUVANT ÊTRE RETIRÉ ET PROCÉDÉ

(30) Priorität: 20.12.2018 DE 102018222579
(43) Veröffentlichungstag der Anmeldung: 24.06.2020
(73) Patentinhaber: MULTIVAC Marking & Inspection GmbH & Co. KG, 32130 Enger (DE)
(72) Erfinder: TREISE, Arthur, 32257 Bünde (DE)
(74) Vertreter: Grünecker Patent- und Rechtsanwälte PartG mbB

(56) Entgegenhaltungen:
- EP-A1- 3 242 056
- CN-A- 104 249 915
- JP-U- S6 327 835

## Beschreibung

Die Erfindung bezieht sich auf eine Endlosfördervorrichtung zum Fördern von Gegenständen, vorzugsweise Lebensmitteln, mit einer entnehmbaren Fördereinheit. Die Erfindung bezieht sich außerdem auf ein Verfahren zum Entnehmen einer Fördereinheit aus einer Endlosfördervorrichtung.

Endlosfördervorrichtungen sind aus der Praxis zum Fördern von Gegenständen bekannt. In vielen Fällen enthalten sie beispielsweise ein Band oder einen oder mehrere Riemen, die auf ein System von Walzen aufgezogen werden und durch Umlaufen um diese Walzen Gegenstände fördern können. In der unveröffentlichten Anmeldung der Anmelderin mit dem Aktenzeichen 10 2018 204 043.5 ist eine Transportvorrichtung beschrieben, die ein durch einen schwenkbaren Träger geführtes Förderband umfasst. Die Bandspannung des Förderbandes kann demnach durch Schwenken des Trägers zwischen verschiedenen Positionen verändert werden, um ein Abziehen des Förderbandes, beispielsweise zu Reinigungszwecken, zu ermöglichen.

Aus der JP S63 27835 U sind eine Endlosfördervorrichtung nach dem Oberbegriff des Anspruchs 1 und ein Verfahren nach dem Oberbegriff des Anspruchs 5 bekannt. Insbesondere sind aus dem Dokument Förderbänder bekannt, die schwenkend aus einer Halterung entnehmbar sind. Dabei kann ein Antriebsriemen entspannt werden.

Auch wenn das Entspannen des Förderbandes die Reinigung von Fördervorrichtungen bereits erleichtert, sind Fördervorrichtungen bekannt, in denen weitere Komponenten die Reinigung erschweren, zum Beispiel Antriebseinheiten für die Walzen der Fördervorrichtung. Eine Aufgabe der Erfindung ist es daher, die Reinigung von Endlosfördervorrichtungen weiter zu vereinfachen.

Diese Aufgabe wird erfindungsgemäß gelöst durch eine Endlosfördervorrichtung mit den Merkmalen des Anspruchs 1 sowie durch ein Verfahren mit den Merkmalen des Anspruchs 5.

Die erfindungsgemäße Endlosfördervorrichtung umfasst eine Fördereinheit mit wenigstens einem Endlosförderer, der zum Fördern von Gegenständen, vorzugsweise Lebensmitteln, konfiguriert ist, einer Antriebswalzenanordnung, die durch einen Antriebsriemen antreibbar und zum Antreiben des Endlosförderers konfiguriert ist und ein Lagerelement aufweist, einer Umlenkwalzenanordnung und einem Zwischenkörper, der zwischen der Antriebswalze und der Umlenkwalze sowie zwischen einem Fördertrum und einem Rücklauftrum des Endlosförderers angeordnet ist. Die Endlosfördervorrichtung umfasst des Weiteren eine Antriebseinheit, die den Antriebsriemen, einen Motor sowie eine Lagervorrichtung umfasst, die zum Eingreifen mit dem Lagerelement konfiguriert ist, wobei durch Schwenken der Fördereinheit relativ zu der Antriebseinheit um eine Drehachse der Antriebswalze in eine erste Richtung der Antriebsriemen entspannbar ist. Durch das Entspannen des Antriebsriemens wird ein Entnehmen der Fördereinheit aus der Endlosfördervorrichtung ermöglicht. Dies kann bedeuten, dass die Verbindung zwischen der Fördereinheit und der Antriebseinheit komplett getrennt wird.

Als Endlosförderer gemäß der vorliegenden Offenbarung können beispielsweise Förderbänder oder Förderriemen angesehen werden. Da die offenbarte Endlosfördervorrichtung der Erleichterung des Reinigungsprozesses dienen kann, kann sie insbesondere zum Befördern von Lebensmitteln konfiguriert sein, was besondere Anforderungen, beispielsweise an die Materialauswahl, mit sich bringen kann.

Als Walzenanordnung im Sinne der vorliegenden Offenbarung können Baugruppen angesehen werden, die neben der jeweiligen Walze auch noch Achsen, Lager sowie gegebenenfalls weitere Komponenten umfassen können, welche die drehbare Lagerung der jeweiligen Walze ermöglichen oder verbessern. Eine Antriebswalzenanordnung kann darüber hinaus ein Antriebselement, wie zum Beispiel ein Zahnrad oder eine Riemenscheibe, umfassen. Als Lagerelement kann eine Struktur der Antriebswalzenanordnung angesehen werden, die dazu konfiguriert ist, Lagerkräfte aufzunehmen, welche die geometrische Anordnung der Antriebswalzenanordnung definieren. Als Lagervorrichtung kann ein entsprechendes Gegenstück an der Antriebseinheit angesehen werden, an dem sich das Lagerelement beispielsweise abstützt. Weitere Konkretisierungen werden im Folgenden noch näher erläutert.

Das Lagerelement weist einen Exzenter auf. Der Exzenter kann insbesondere eine Struktur sein, die sich exzentrisch zu der Drehachse der Antriebswalze erstreckt. Dies kann bedeuten, dass unterschiedliche Abschnitte des Exzenters unterschiedliche Abstände zur Drehachse aufweisen. Beim Schwenken der Fördereinheit um die Drehachse der Antriebswalze kann der Exzenter mitschwenken und dadurch das Entspannen oder Spannen des Antriebsriemens unterstützen. Der Exzenter kann eine besonders einfache Bauweise eines Lagerelements darstellen. Dadurch kann insbesondere das Gewicht der Fördereinheit und der Endlosfördervorrichtung insgesamt verringert werden. Dies kann das Einsatzspektrum der Endlosfördervorrichtung vorteilhaft erweitern, beispielsweise kann ein Einsatz als Bandwägevorrichtung ermöglicht werden.

Die Lagervorrichtung weist eine erste Anschlagfläche auf, die zum Eingreifen mit dem Exzenter konfiguriert ist. Beispielsweise kann der Exzenter sich an der ersten Anschlagfläche abstützen. Beim Schwenken der Fördereinheit relativ zu der Antriebseinheit kann durch das Schwenken des Exzenters ein Abstand zwischen der Drehachse und der ersten Anschlagfläche vergrößert werden. Dadurch kann insbesondere der Antriebsriemen gespannt werden. Der Fachmann erkennt, dass beim Schwenken in die entgegengesetzte Richtung der Abstand verringert und der Antriebsriemen dadurch entspannt werden kann.

In einer bevorzugten Variante kann die Antriebseinheit und/oder die Fördereinheit mit einem Magneten verbunden sein, der die Fördereinheit magnetisch in eine zweite, der ersten Richtung entgegengesetzte Richtung zieht. Hierdurch kann ein unbeabsichtigtes Lösen der Fördereinheit von der Antriebseinheit vermieden werden. Insbesondere kann die Spannung des Antriebsriemens hierdurch aufrechterhalten werden. Das Ziehen der Fördereinheit in die erste Richtung kann dabei durch einen Magneten, der an der Fördereinheit selbst vorgesehen ist und eine Fläche der Antriebseinheit anzieht, gewährleistet werden. Alternativ oder zusätzlich ist es denkbar, dass ein an der Antriebseinheit befestigter Magnet eine Fläche der Fördereinheit anzieht.

Besonders günstig ist es, wenn die Endlosfördervorrichtung des Weiteren eine Wiegevorrichtung aufweist und dazu konfiguriert ist, eine Masse der geförderten Gegenstände zu bestimmen. Dies kann eine besonders vorteilhafte Anwendung der Endlosfördervorrichtung als Wägeband ermöglichen. Insbesondere Lebensmittelportionen können durch solche Wägebänder besonders effizient abgewogen werden.

In einer weiteren vorteilhaften Variante kann die Antriebseinheit und/oder die Wiegevorrichtung ein erstes Positionierungselement aufweisen, das zum Eingreifen mit einem zweiten Positionierungselement, welches an dem Zwischenkörper vorgesehen ist, konfiguriert sein kann. Dies kann das Einsetzen der Fördereinheit in die Endlosfördervorrichtung erleichtern. Bei einer Verwendung in Verbindung mit einer Wiegevorrichtung kann außerdem sichergestellt werden, dass die Fördereinheit an einer definierten Position angeordnet ist, sodass das Wiegeergebnis nicht durch sich verändernde Positionierungen beeinflusst wird. Bei dem ersten Positionierungselement kann es sich um einen Vorsprung handeln. Bei dem zweiten Positionierungselement kann es sich um eine Vertiefung oder eine Öffnung handeln. Auch eine umgekehrte Konfiguration ist denkbar.

Die Erfindung bezieht sich auch auf ein Verfahren zum Entnehmen einer Fördereinheit aus einer Endlosfördervorrichtung, wobei die Fördereinheit wenigstens einen Endlosförderer, eine Antriebswalzenanordnung, eine Umlenkwalzenanordnung und einen zwischen der Antriebswalzenanordnung und der Umlenkwalzenanordnung angeordneten Zwischenkörper aufweist. Das Verfahren umfasst die folgenden Schritte: Schwenken der Fördereinheit relativ zu einer Antriebseinheit um eine Drehachse der Antriebswalzenanordnung, wodurch ein mit der Antriebswalzenanordnung eingreifender Antriebsriemen entspannt wird, Bewegen der Fördereinheit in einer parallel zu der Drehachse verlaufenden Richtung, wodurch der Antriebsriemen von der Antriebswalzenanordnung abgestreift wird. Die vorstehenden Erläuterungen der Begrifflichkeiten mit Bezug auf die Endlosfördervorrichtung gelten analog auch für das Verfahren.

Es ist vorteilhaft, wenn das Schwenken der Fördereinheit ein Überwinden einer Haltekraft umfasst, die vorzugsweise durch Magneten erzeugt wird. Hierdurch kann ein unbeabsichtigtes Lösen der Fördereinheit von der Antriebseinheit vermieden werden. Insbesondere kann die Spannung des Antriebsriemens hierdurch aufrechterhalten werden.

Das Entspannen des Antriebsriemens während des Schwenkens wird durch einen Exzenter bewirkt, der vorzugsweise an der Antriebswalzenanordnung angeordnet ist. Der Exzenter kann eine besonders einfache Bauweise eines Lagerelements darstellen. Dadurch kann insbesondere das Gewicht der Fördereinheit und der Endlosfördervorrichtung insgesamt verringert werden. Dies kann das Einsatzspektrum der Endlosfördervorrichtung vorteilhaft erweitern, beispielsweise kann ein Einsatz als Bandwägevorrichtung ermöglicht werden.

Die Erfindung bezieht sich auf eine Endlosfördervorrichtung sowie auf ein Verfahren der vorstehend beschriebenen Art. Ein vorteilhaftes Ausführungsbeispiel wird im Folgenden anhand von Figuren näher erläutert.
- Figur 1A: zeigt eine perspektivische Ansicht einer Endlosfördervorrichtung in einer Konfiguration, in der die Fördereinheit und die Antriebseinheit derart zueinander positioniert sind, dass der Antriebsriemen gespannt ist.
- Figur 1B: zeigt eine perspektivische Ansicht einer Endlosfördervorrichtung in einer Konfiguration, in der die Antriebseinheit und die Fördereinheit derart zueinander angeordnet sind, dass der Antriebsriemen entspannt ist.
- Figur 2A: zeigt eine vergrößerte Ansicht des in Figur 1A mit II gekennzeichneten Bereichs.
- Figur 2B: zeigt die Ansicht aus Figur 2A, wobei zur besseren Übersichtlichkeit Komponenten ausgeblendet sind.
- Figur 3A: zeigt eine vergrößerte Ansicht des in Figur 1B mit III gekennzeichneten Bereichs.
- Figur 3B: zeigt die Ansicht aus Figur 3A, wobei zur besseren Übersichtlichkeit Komponenten ausgeblendet sind.

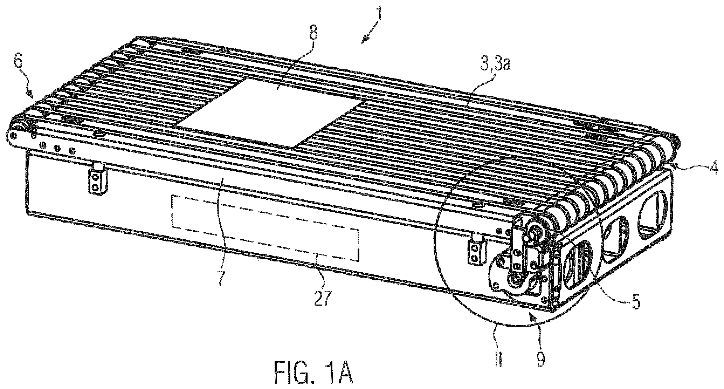

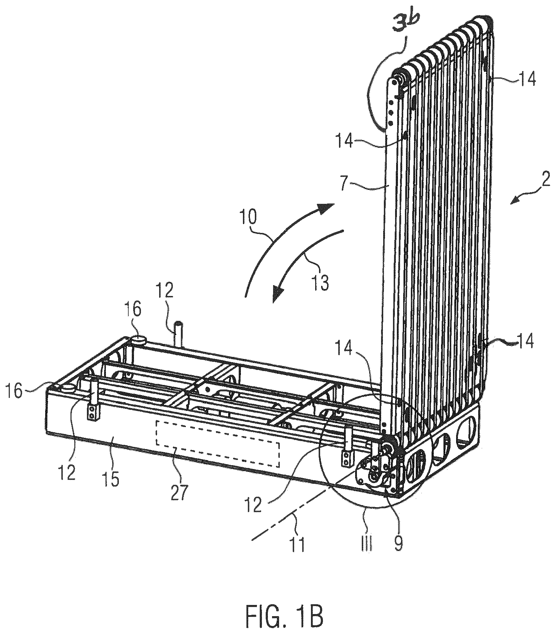

In Figur 1A ist eine perspektivische Ansicht einer Endlosfördervorrichtung 1 dargestellt. Diese umfasst eine Fördereinheit 2 (siehe Figur 1B). Die Fördereinheit 2 enthält einen Endlosförderer 3. Im vorliegenden Ausführungsbeispiel sind mehrere Endlosförderer 3 in Form von Förderriemen vorgesehen. Wie bereits angesprochen, ist jedoch auch ein einzelner Endlosförderer 3, zum Beispiel in Form eines Förderbandes, denkbar.

Die Fördereinheit 2 enthält eine Antriebswalzenanordnung 4. Die Antriebswalzenanordnung 4 kann zum Antreiben des oder der Endlosförderer 3 konfiguriert sein. Darüber hinaus kann die Antriebswalzenanordnung 4 durch einen Antriebsriemen 5 antreibbar sein. Die Fördereinheit enthält eine Umlenkwalzenanordnung 6. Die Umlenkwalzenanordnung 6 kann an einem relativ zu der Antriebswalzenanordnung 4 gegenüberliegenden Abschnitt der Fördereinheit 2 angeordnet sein.

Die Fördereinheit 2 umfasst außerdem einen Zwischenkörper 7. Dieser ist zwischen der Antriebswalzenanordnung 4 und der Umlenkwalzenanordnung 6 angeordnet. Auf einer einem geförderten Gegenstand 8 zugewandten Seite des Zwischenkörpers 7 kann ein Fördertrum 3a des Endlosförderers 3 verlaufen. Auf einer dem geförderten Produkt 8 abgewandten Seite des Zwischenkörper 7 kann ein Rücklauftrum 3b verlaufen. In anderen Worten kann der Zwischenkörper 7 zwischen dem Fördertrum 3a und dem Rücklauftrum 3b angeordnet sein.

Die Endlosfördervorrichtung 1 umfasst eine Antriebseinheit 9. Die Antriebseinheit 9 kann den Antriebsriemen 5 und einen Motor (nicht dargestellt) umfassen. Die Antriebseinheit 9 und dabei insbesondere der Antriebsriemen 5 und der Motor können zusammenwirken, um die Antriebswalzenanordnung 4 anzutreiben. Zusätzlich kann die Endlosfördervorrichtung 1 eine Wiegevorrichtung 27 aufweisen.

In Figur 1B ist die Endlosfördervorrichtung 1 in einem aufgeklappten Zustand dargestellt. Die Fördereinheit 2 wurde in eine erste Richtung 10 um eine Drehachse 11 der Antriebswalzenanordnung 4 geschwenkt. In Figur 1B ist besser sichtbar, dass die Endlosfördervorrichtung 1 ein erstes Positionierungselement 12 umfassen kann. Im vorliegenden Ausführungsbeispiel sind vier erste Positionierungselemente 12 vorgesehen, von denen in Figur 1B jedoch nur drei sichtbar sind. Wenn die Fördereinheit 2 in einer zweiten Richtung 13, die der ersten Richtung entgegengesetzt sein kann, geschwenkt wird, können die ersten Positionierungselemente 12 mit zweiten Positionierungselementen 14 eingreifen, die an der Fördereinheit 2, insbesondere an dem Zwischenkörper 7, vorgesehen sein können. Dem Fachmann sollte klar sein, dass die Anzahl der zweiten Positionierungselemente 14 der Anzahl der ersten Positionierungselemente 12 entsprechen kann. Demzufolge kann anstatt der vier im Ausführungsbeispiel dargestellten zweiten Positionierungselemente auch nur ein zweites Positionierungselement 14 oder aber mehrere, insbesondere zwei, drei oder fünf zweite Positionselemente 14 vorgesehen sein.

Die ersten Positionierungselemente 12 können mit der Antriebseinheit 9 verbunden sein. Dies kann zum Beispiel durch einen Träger 15 erfolgen. In ähnlicher Weise kann die Antriebseinheit 9 mit einem oder mehreren Magneten 16 verbunden sein. Auch die Verbindung zwischen der Antriebseinheit 9 und den Magneten 16 kann in Form des Trägers 15 vorliegen. Wie im vorliegenden Ausführungsbeispiel dargestellt, können die Magneten 16 dazu konfiguriert sein, die Fördereinheit 2, und dabei insbesondere den Zwischenkörper 7, in die zweite Richtung 13 zu ziehen.

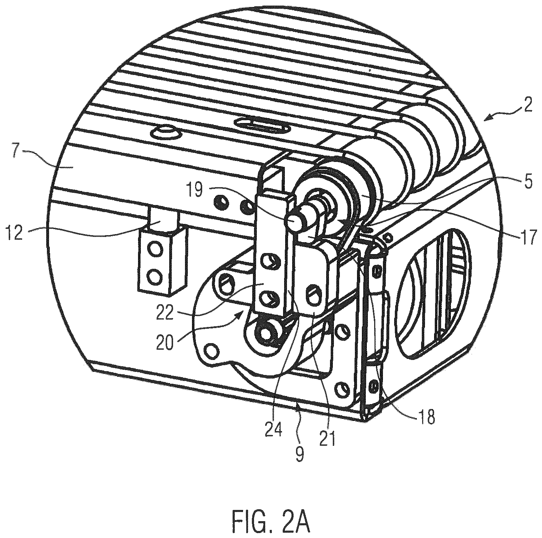

In Figur 2A ist der in Figur 1A mit II gekennzeichnete Bereich vergrößert dargestellt. Insbesondere sind weitere Komponenten der Antriebseinheit 9 und der Fördereinheit 2 besser zu erkennen. Wie im vorliegenden Ausführungsbeispiel kann die Antriebswalzenanordnung 4 ein Lagerelement 17 aufweisen. Das Lagerelement 17 kann einen Exzenter 18 aufweisen. Die Antriebswalzenanordnung 4, insbesondere das Lagerelement 17, kann darüber hinaus einen Wellenfortsatz 19 aufweisen.

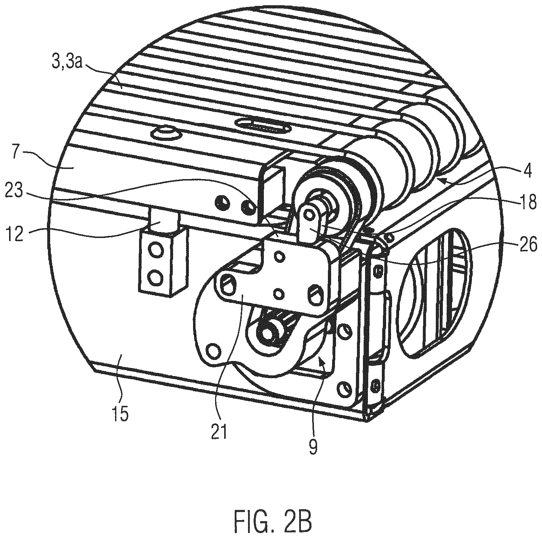

Die Antriebseinheit 9 kann eine Lagervorrichtung 20 enthalten. Die Lagervorrichtung 20 kann, wie im vorliegenden Ausführungsbeispiel, einen ersten Anschlag 21 und vorzugsweise einen zweiten Anschlag 22 aufweisen. Der erste und der zweite Anschlag 21, 22 können auch in einem vorzugsweise einteilig ausgeführten Bauteil zusammengefasst werden. Wie in Figur 2A bereits gut zu erkennen ist, kann das Lagerelement 17 zum Eingreifen mit der Lagervorrichtung 20 konfiguriert sein. Insbesondere kann der Exzenter 18 zum Eingreifen mit einer ersten Anschlagfläche 23 (siehe Figur 2B) konfiguriert sein, die an dem ersten Anschlag 21 vorgesehen sein kann. Das Eingreifen zwischen dem Lagerelement 17 und der Lagervorrichtung 20 kann außerdem ein Eingreifen zwischen dem Wellenfortsatz 19 und einer zweiten Anschlagfläche 24 umfassen, die an dem zweiten Anschlag 22 vorgesehen sein kann. In Figur 2B ist der Eingriff zwischen dem Exzenter 18 und der ersten Anschlagfläche 23 besser zu erkennen, da dort der zweite Anschlag 23 und der Wellenfortsatz 19 ausgeblendet sind. Der Wellenfortsatz 19 kann dazu konfiguriert sein, Lagerkräfte in Förderrichtung des Endlosförderers 3 aufzunehmen, vorzugsweise durch den Eingriff des Wellenfortsatzes 19 mit der Lagervorrichtung 20, insbesondere mit der zweiten Anschlagfläche 24. Der Exzenter 18 kann dazu konfiguriert sein, Lagerkräfte in einer Richtung aufzunehmen, die im Wesentlichen senkrecht zu der Förderrichtung des Endlosförderers 3 verläuft, vorzugsweise durch den Eingriff des Exzenters 18 mit der Lagervorrichtung 20, insbesondere mit der ersten Anschlagfläche 23.

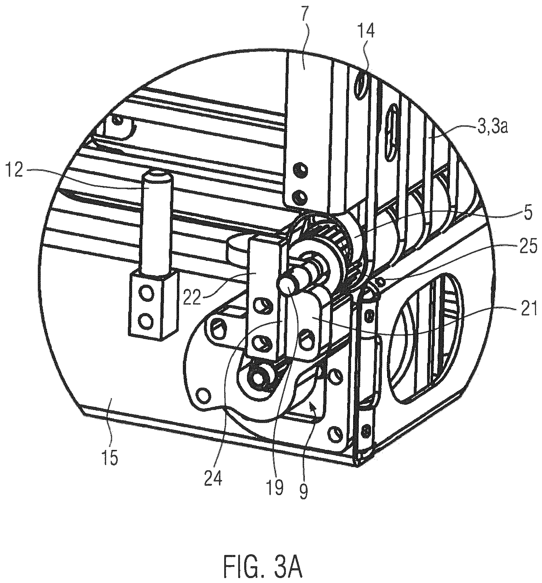

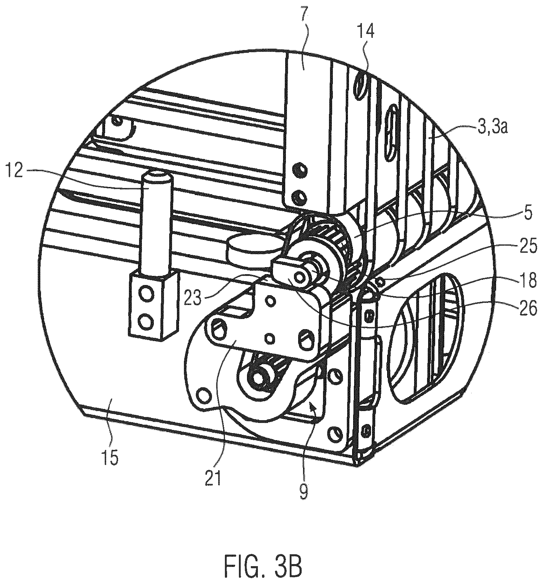

In den Figuren 3A und 3B ist der in Figur 1B mit III gekennzeichnete Bereich vergrößert dargestellt. Analog zu Figur 2B sind in Figur 3B der Wellenfortsatz 19 und der zweite Anschlag 22 ausgeblendet. In den Figuren 3A und 3B ist zu erkennen, dass der Antriebsriemen 5 durch Schwenken der Fördereinheit 2 in der ersten Richtung 10 entspannt wurde. Dies kann bedeuten, dass ein Antriebselement 25 der Antriebswalzenanordnung 4, im vorliegenden Ausführungsbeispiel ein Zahnrad, außer Eingriff mit dem Antriebsriemen 5 gebracht wird. In diesem Zustand kann die Fördereinheit in einer parallel zu der Drehachse 11 verlaufenden Richtung bewegt und dadurch der Antriebsriemen 5 von der Antriebswalzenanordnung 4 abgestreift werden. Beim Wiedereinsetzen einer entnommenen Fördereinheit 2 kann eine Stirnfläche 26 des Lagerelements 17 mit einer axialen Anschlagfläche, die an der Lagervorrichtung 20 vorgesehen sein kann, in Eingriff kommen, um zu signalisieren, dass die Fördereinheit 2 in einer geeigneten Position angeordnet ist, um sie in die erste Richtung 10 zu schwenken.

## Patentansprüche

1. Endlosfördervorrichtung (1), umfassend:
eine Fördereinheit (2) mit:
wenigstens einem Endlosförderer (3), der zum Fördern von Gegenständen (8), vorzugsweise Lebensmitteln, konfiguriert ist,
einer Antriebswalzenanordnung (4), die durch einen Antriebsriemen (5) antreibbar und zum Antreiben des Endlosförderers (3) konfiguriert ist und ein Lagerelement (17) aufweist,
einer Umlenkwalzenanordnung (6) und
einem Zwischenkörper (7), der zwischen der Antriebswalzenanordnung (4) und der Umlenkwalzenanordnung (6) sowie zwischen einem Fördertrum (3a) und einem Rücklauftrum (3b) des Endlosförderers (3) angeordnet ist;
eine Antriebseinheit (9), die den Antriebsriemen (5), einen Motor sowie eine Lagervorrichtung (20) umfasst, die zum Eingreifen mit dem Lagerelement (17) konfiguriert ist, wobei durch Schwenken der Fördereinheit (2) relativ zu der Antriebseinheit (9) in eine erste Richtung (10) der Antriebsriemen (5) entspannbar ist,
**dadurch gekennzeichnet, dass** das Schwenken der Fördereinheit (2) um eine Drehachse (11) der Antriebswalzenanordnung (4) erfolgt, dass das Lagerelement (17) einen Exzenter (18) aufweist, und dass die Lagervorrichtung (20) eine erste Anschlagfläche (23) aufweist, die zum Eingreifen mit dem Exzenter (18) konfiguriert ist.

2. Endlosfördervorrichtung nach Anspruch 1, wobei die Antriebseinheit (9) und/oder die Fördereinheit (2) mit einem Magneten (16) verbunden ist, der die Fördereinheit (2) magnetisch in eine, der ersten Richtung (10) entgegengesetzte, zweite Richtung (13) zieht.

3. Endlosfördervorrichtung nach einem der vorangehenden Ansprüche, wobei die Endlosfördervorrichtung (1) des Weiteren eine Wiegevorrichtung (27) aufweist und dazu konfiguriert ist, eine Masse der geförderten Gegenstände (8) zu bestimmen.

4. Endlosfördervorrichtung nach einem der vorangehenden Ansprüche, wobei die Antriebseinheit (9) und/oder die Wiegevorrichtung (27) ein erstes Positionierungselement (12) aufweist, das zum Eingreifen mit einem zweiten Positionierungselement (14), welches an dem Zwischenkörper (7) vorgesehen ist, konfiguriert ist.

5. Verfahren zum Entnehmen einer Fördereinheit (2) aus einer Endlosfördervorrichtung (1), wobei die Fördereinheit (2) wenigstens einen Endlosförderer (3), eine Antriebswalzenanordnung (4), eine Umlenkwalzenanordnung (6) und einen zwischen der Antriebswalzenanordnung (4) und der Umlenkwalzenanordnung (6) angeordneten Zwischenkörper (7) aufweist, wobei das Verfahren umfasst:
Schwenken der Fördereinheit (2) relativ zu einer Antriebseinheit (9), wodurch ein mit der Antriebswalzenanordnung (4) eingreifender Antriebsriemen (5) entspannt wird,
**dadurch gekennzeichnet, dass** das Schwenken der Fördereinheit (2) um eine Drehachse (11) der Antriebswalzenanordnung (4) erfolgt, dass das Verfahren umfasst:
Bewegen der Fördereinheit (2) in einer parallel zu der Drehachse (11) verlaufenden Richtung, wodurch der Antriebsriemen (5) von der Antriebswalzenanordnung (4) abgestreift wird, wobei
das Entspannen des Antriebsriemens (5) während dem Schwenken durch einen Exzenter (18) bewirkt wird, der vorzugsweise an der Antriebswalzenanordnung (4) angeordnet ist.

6. Verfahren nach Anspruch 5, wobei das Schwenken der Fördereinheit (2) ein Überwinden einer Haltekraft umfasst, die vorzugsweise durch Magneten (16) erzeugt wird.

## Claims

1. Endless conveyor device (1), comprising:
a conveyor unit (2) having:
at least one endless conveyor (3), which is configured to convey items (8), preferably food products,
a drive roller assembly (4), which is drivable by a drive belt (5) and configured to drive the endless conveyor (3) and has a support element (17),
a deflecting roller assembly (6) and
an intermediate body (7), disposed between the drive roller assembly (4) and the deflecting roller assembly (6) as well as between a conveying strand (3a) and a return strand (3b) of the endless conveyor (3);
a drive unit (9), comprising the drive belt (5), a motor and a support device (20), which is configured to engage with the support element (17), wherein the drive belt is relaxable by pivoting the conveyor unit (2) relative to the drive unit (9) in a first direction (10),
**characterized in that** the pivoting of the conveyor unit (2) occurs about a rotation axis (11) of the drive roller assembly (4), that the support element (17) has a cam (18), and that the support device (20) has a first bearing surface (23), configured to engage with the cam (18).

2. Endless conveyor device according to claim 1, wherein the drive unit (9) and/or the conveyor unit (2) is connected to a magnet (16), which magnetically pulls the conveyor unit (2) in a second direction (13) opposite the first direction (10).

3. Endless conveyor device according to one of the preceding claims, wherein the endless conveyor device (1) further comprises a weighing device (27) and is configured to determine a mass of the items (8) being conveyed.

4. Endless conveyor device according to one of the preceding claims, wherein the drive unit (9) and/or the weighing device (27) has a first positioning element (12), which is configured to engage with a second positioning element (14), the latter being provided on the intermediate body (7).

5. Method for removing a conveyor unit (2) from an endless conveyor device (1), wherein the conveyor unit (2) has at least one endless conveyor (3), a drive roller assembly (4), a deflecting roller assembly (6) and an intermediate body (7) disposed between the drive roller assembly (4) and the deflecting roller assembly (6), wherein the method comprises :
pivoting the conveyor device (2) relative to a drive unit (9), whereby a drive belt (5) engaging with the drive roller assembly (4) is relaxed,
**characterized in that** the pivoting of the conveyor unit (2) occurs about a rotation axis (11) of the drive roller assembly (4), that the method comprises:
moving the conveyor unit (2) in a direction oriented parallel to the rotation axis (11), whereby the drive belt (5) is stripped off the drive roller assembly (4), wherein
the relaxing of the drive belt (5) during the pivoting is effected by a cam (18), which is preferably disposed on the drive roller assembly (4).

6. Method according to claim 5, wherein pivoting the conveyor device (2) comprises overcoming a holding force, which is preferably generated by a magnet (16).

## Revendications

1. Dispositif de transport en continu (1), comprenant :
une unité de transport (2) avec :
au moins un transporteur en continu (3) configuré pour transporter des objets (8), de manière préférée des aliments,
un agencement de rouleaux d'entraînement (4) qui peut être entraîné grâce à une courroie d'entraînement (5) et est configuré pour entraîner le transporteur en continu (3) et qui présente un élément formant palier (17),
un agencement de rouleaux de renvoi (6) et
un corps intermédiaire (7) agencé entre l'agencement de rouleaux d'entraînement (4) et l'agencement de rouleaux de renvoi (6), ainsi qu'entre un compartiment de transport (3a) et un compartiment de retour (3b) du transporteur en continu (3) ;
une unité d'entraînement (9) qui comprend la courroie d'entraînement (5), un moteur ainsi qu'un dispositif pour palier (20) configuré pour venir en prise avec l'élément formant palier (17), dans lequel la courroie d'entraînement (5) peut être relâchée grâce à un pivotement de l'unité de transport (2) par rapport à l'unité d'entraînement (9) dans une première direction (10),
**caractérisé en ce que** le pivotement de l'unité de transport (2) s'effectue autour d'un axe de rotation (11) de l'agencement de rouleaux d'entraînement (4), **en ce que** l'élément formant palier (17) présente un excentrique (18) et **en ce que** le dispositif pour palier (20) présente une première surface de butée (23) configurée pour venir en prise avec l'excentrique (18).

2. Dispositif de transport en continu selon la revendication 1, dans lequel l'unité d'entraînement (9) et/ou l'unité de transport (2) est reliée à un aimant (16) qui tire magnétiquement l'unité de transport (2) dans une seconde direction (13) opposée à la première direction (10).

3. Dispositif de transport en continu selon l'une quelconque des revendications précédentes, dans lequel le dispositif de transport en continu (1) présente en outre un dispositif de pesage (27) et est configuré pour déterminer une masse des objets (8) transportés.

4. Dispositif de transport en continu selon l'une quelconque des revendications précédentes, dans lequel l'unité d'entraînement (9) et/ou le dispositif de pesage (27) présente un premier élément de positionnement (12) configuré pour venir en prise avec un second élément de positionnement (14) prévu au niveau du corps intermédiaire (7).

5. Procédé permettant de retirer une unité de transport (2) d'un dispositif de transport en continu (1), dans lequel l'unité de transport (2) comprend au moins un transporteur en continu (3), un agencement de rouleaux d'entraînement (4), un agencement de rouleaux de renvoi (6) et un corps intermédiaire (7) agencé entre l'agencement de rouleaux d'entraînement (4) et l'agencement de rouleaux de renvoi (6), dans lequel le procédé comprend l'étape consistant à :
faire pivoter l'unité de transport (2) par rapport à une unité d'entraînement (9), ce qui relâche une courroie d'entraînement (5) en prise avec l'agencement de rouleaux d'entraînement (4),
**caractérisé en ce que** le pivotement de l'unité de transport (2) s'effectue autour d'un axe de rotation (11) de l'agencement de rouleaux d'entraînement (4), et **en ce que** le procédé comprend l'étape consistant à :
déplacer l'unité de transport (2) dans une direction parallèle à l'axe de rotation (11), ce qui retire la courroie d'entraînement (5) de l'agencement de rouleaux d'entraînement (4), dans lequel
le relâchement de la courroie d'entraînement (5) pendant le pivotement est provoqué par un excentrique (18) agencé de manière préférée au niveau de l'agencement de rouleaux d'entraînement (4).

6. Procédé selon la revendication 5, dans lequel le pivotement de l'unité de transport (2) comprend une étape consistant à surmonter une force de retenue générée de manière préférée par des aimants (16).
